# EUROPÄISCHE PATENTSCHRIFT

(11) **EP 1 582 766 B1**
(45) Veröffentlichungstag und Bekanntmachung des Hinweises auf die Patenterteilung: **09.12.2009**
(21) Anmeldenummer: 05005317.2
(22) Anmeldetag: 11.03.2005
(51) Int. Cl.: F16F 15/131

(54) **Torsionsschwingungsdämpfer**
Torsional vibration damper
Amortisseur de vibrations torsionelles

(30) Priorität: 01.04.2004 DE 102004016760
(43) Veröffentlichungstag der Anmeldung: 05.10.2005
(73) Patentinhaber: ZF Friedrichshafen AG, 88046 Friedrichshafen (DE)
(72) Erfinder: Fischer, Matthias, 97714 Oerlenbach-Eltingshausen (DE); Feldhaus, Reinhard, 97464 Niederwerrn (DE); Carlson, Cora, 97456 Dittelbrunn (DE); Geiger, Martin, 97261 Güntersleben (DE); Weth, Jürgen, 97464 Niederwerrn (DE); Zopf, Stefan, 97505 Geldersheim (DE)

(56) Entgegenhaltungen:
- WO-A-03/040590
- DE-A1- 10 010 953
- DE-A1- 10 157 397
- DE-A1- 10 206 647
- US-A- 4 484 898
- US-A- 5 356 339

## Beschreibung

Die Erfindung betrifft einen Torsionsschwingungsdämpfer gemäß dem Oberbegriff des Anspruches 1.

Ein derartiger Torsionsschwingungsdämpfer ist beispielsweise durch die DE 102 06 647 A1 bekannt. Dieser Torsionsschwingungsdämpfer weist ein gegenüber einer Mittenachse eines Antriebes, wie der Kurbelwelle einer Brennkraftmaschine, zentriertes antriebsseitiges Übertragungselement und eine relativ hierzu drehauslenkfjare, gegenüber einer Mittenachse eines Abtriebes, wie einer Getriebeeingangswelle, zentrierte Nabenscheibe auf. Das antriebsseitige Übertragungselement ist über eine Dämpfungseinrichtung, die über Energiespeicher verfügt, mit der Nabenscheibe verbunden. Diese Nabenscheibe ist mit einem radial außen vorgesehenen ersten Momentenüberträger drehfest, gegenüber dem ein radial innen liegender zweiter Momentenüberträger drehbar angeordnet ist, der für eine drehfeste Verbindung mit dem Abtrieb eine Nabe aufweist.

Zwischen den beiden Momentenüberträgern ist eine einen vorbestimmten Relativdrehauslenkwinkel zulassende, mit zwei Verzahnungsteilen ausgebildete Verzahnung vorgesehen, wobei jeder der beiden Verzahnungsteile jeweils mit Zähnen ausgebildet ist, von denen jeder mit seiner Zahnaußenseite auf einen zugeordneten Umfangsaussparungsboden einer den Zahn aufnehmenden Umfangsaussparung des jeweils anderen Verzafinungsteiles zugerichtet ist. Die Umfangsaussparung ist in Umfangsrichtung größer als die größte Umfangserstreckung des Zahnes, so dass dieser ungehindert radial in die Umfangsausparung eindringen kann. Die Zähne des jeweiligen Verzahnungsteiles sind mit ihren jeweiligen Zahnaußenseiten zwar an den zugeordneten Umfangsaussparungsboden der Umfangsaussparung des jeweils anderen Verzahnungsteiles angenähert, jedoch verbleibt zwischen der Zahnaußenseite und dem Umfangsaussparungsboden ein Radialspiel, wobei dieses allerdings von begrenzter Erstreckungsweite ist. Weiterhin ist der Verzahnung ein in Umfangsrichtung zwischen den beiden Verzahnungsteilen wirksames, als Vorspannelement ausgebildetes und eine Vorspannkraft umfangsmäßig zwischen den beiden Momentenüberträgern ausübendes elastisches Element zugeordnet, wobei dieses elastische Element die beiden Momentenüberträger in einer vorbestimmten Relativdrehauslenkposition zueinander halten soll, bei Auslenkung eines des einen Momentenüberträgers gegenüber dem jeweils anderen allerdings eine Verformung erfährt.

Probleme treten bei derartigen Torsionsschwingungsdämpfern insbesondere dann auf, wenn das antriebsseitige Übertragungselement gegenüber dem Antrieb und der zweite Momentenüberträger gegenüber dem Abtrieb, wie einer Getriebeeingangswelle, zentriert ist, und die beiden Übertragungselemente dadurch bei einem Achsversatz mit einem Radialversatz belastet sind. Zwar mag das zwischen den Zahnaußenseiten und dem zugeordneten Umfangsaussparungsboden der beiden Verzahnungsteile vorhandene Radialspiel geringfügige Ausgleichsbewegungen der beiden Momentenüberträger und damit des antriebsseitigen Übertragungselementes gegenüber dem zweiten Momentenüberträger jeweils zueinander auszugleichen, jedoch ist davon auszugehen, dass bei größeren Achsversätzen lediglich die Energiespeicher der Dämpfungseinrichtung für einen Ausgleich des Radialversatzes zur Verfügung stehen. Das gleiche Problem besteht hinsichtlich Taumelbewegungen, die von der Kurbelwelle des Antriebs erzeugt und mit radialer sowie axialer Bewegungskomponente auf das antriebsseitige Übertragungselement übertragen werden. Auch hier sind wegen fehlender Elastizitäten sowohl in Radial- als auch in Axialrichtung im wesentlichen nur die Energiespeicher befähigt, in sehr begrenztem Umfang Relativbewegungen zwischen den Übertragungselementen aufzufangen.

Ein weiteres Problem bei dem offenbarten Torsionsschwingungsdämpfer besteht insbesondere bei Leerlaufbetrieb, also einer Betriebsweise mit geringer Drehzahl und ebenfalls geringer Last. Torsionsschwingungen können dann zu geringen Relativdrehauslenkungen zwischen dem ersten Momentenüberträger und dem zweiten Momentenüberträger führen, und zwar verbunden mit ständigem Wechsel der Relativauslenkrichtung. Sind dann die zwischen den beiden Momentenüberträgern vorgesehenen elastischen Elemente mit zu geringen Steifigkeiten ausgebildet, können die Zahnflanken der Zähne in wechselweisem Kontakt mit den beidseits vorhandenen Umfangsaüssparungsflanken gelangen, was sich als unerwünschtes Verzahnungsrasseln äußert, und zudem den Verschleiß an den Zahnflanken fördert. Sind die elastischen Elemente dagegen zur Vermeidung dieser Nachteile mit so hoher Steifigkeit ausgelegt, dass ein Kontakt der Zahnflanken mit den beidseits benachbarten Umfangsaussparungsflanken auf jeden Fall verhindert wird, muss von einer spürbaren Reduzierung der Entkopplungsgüte ausgegangen werden.

Ein weiterer Torsionsschwingungsdämpfer ist aus der DE 100 10 953 A1 bekannt. Dieser Torsionsschwingungsdämpfer weist ein antriebsseitiges Übertragungselement auf, das mittels eines im wesentlichen nach radial außen führenden Primärflansches an einen Antrieb, wie eine Kurbelwelle einer Brennkraftmaschine, angebunden ist, wobei an diesem Primärflansch im Umfangsbereich eine sich im wesentlichen nach radial innen erstreckende Dichtungswand befestigt ist. Da die letztgenannte zur Aufnahme eines Zahnkranzes mittels eines Haltebügels vorgesehen ist, wirkt das antriebsseitige Übertragungselement als Schwungmasse.

Der Primärflansch begrenzt gemeinsam mit der daran befestigten Dichtungswand einen im radial äußeren Bereich vorgesehenen, zur Aufnahme von Energiespeichern einer Dämpfungseinrichtung dienenden Raum, der aufgrund seiner zumindest teilweisen Befüllung mit viskosem Medium in Fachkreisen üblicherweise als Fettkammer bezeichnet ist. An dem Primärflansch sind ebenso wie an der Dichtungswand in Richtung der Energiespeicher weisende Ansteuerelemente vorgesehen, die zur Beaufschlagung der Energiespeicher dienen, die sich anderenends an einer nach radial innen verlaufenden Nabenscheibe abstützen. Die letztgenannte ist einerseits mittels einer Nietverbindung drehfest mit beidseits angeordneten Deckblechen eines ersten Momentenüberträgers, und steht andererseits über eine einen vorbestimmten Drehwinkel zulassende Verzahnung mit einem zweiten Momentenüberträger in Wirkverbindung, wobei in Umfangsrichtung zwischen den Deckblechen und dem zweiten Momentenüberträger elastische Elemente in Form zweiter Energiespeicher vorgesehen sind. Die beiden Momentenüberträger vermögen demnach aufgrund der zweiten Energiespeicher eine Relativdrehauslenkung zueinander auszuführen, wobei die Verzahnung zur winkelmäßigen Begrenzung dieser Relativdrehauslenkung dient. Der radial innere Momentenüberträger schließlich ist einstückig mit einer Nabe ausgebildet, die über eine Verzahnung drehfest mit einem Abtrieb verbunden werden kann.

Auch bei diesen Torsionsschwingungsdämpfern treten insbesondere dann Probleme auf, wenn das antriebsseitige Übertragungselement gegenüber dem Antrieb und der zweite Momentenüberträger gegenüber dem Abtrieb zentriert ist, und das antriebsseitige Übertragungselement sowie der zweite Momentenüberträger dadurch bei einem Achsversatz mit einem Radialversatz belastet sind. Bei diesem Torsionsschwingungsdämpfer stehen lediglich die Energiespeicher der Dämpfungseinrichtung für einen Ausgleich des Radialversatzes zur Verfügung. Das gleiche Problem besteht hinsichtlich Taumelbewegungen, die von der Kurbelwelle des Antriebs erzeugt werden und mit radialer sowie axialer Bewegungskomponente auf das antriebsseitige Übertragungselement übertragen werden. Auch hier sind wegen fehlender. Elastizitäten in Radial- und in Axialrichtung im wesentlichen nur die Energiespeicher befähigt, in sehr begrenztem Umfang axiale Relativbewegungen zwischen den Übertragungselementen aufzufangen.

Ein weiteres Problem bei dem offenbarten Torsionsschwingungsdämpfer besteht in der ungleichmäßigen Masseverteilung, wobei, wie eingangs erwähnt, das antriebsseitige Übertragungselement als Schwungmasse wirksam ist, während der zweite Momentenüberträger zum Einen vergleichsweise massearm ausgebildet ist, und zum Anderen seine wesentlichen Masseanteile im radial inneren Bereich aufweist, so dass die dem zweiten Momentenüberträger zugrundeliegende Massenträgheit im Vergleich zur Massenträgheit des antriebsseitigen Übertragungselementes, bei welchem sich die wesentlichen Massen im radial äußeren Bereich befinden, extrem gering ist. Dies wirkt sich nachteilig auf die Entkoppelungsgüte des Torsionsschwingungsdämpfers aus.

Der Erfindung liegt die Aufgabe zugrunde, einen antriebsseitig mit einem Antrieb und abtriebsseitig mit einem- Abtrieb verbundenen Torsionsschwingungsdämpfer so auszubilden, dass ein Radialversatz zwischen den Mittenachsen von Antrieb und Abtrieb hervorragend ausgleichbar ist, und selbst bei eingeleiteten Torsionsschwingungen Geräusche, insbesondere bei Leerlaufbetrieb des Antriebs auftretende Rasselgeräusche, effizient vermeidbar sind.

Diese Aufgabe wird erfindungsgemäß durch die im Kennzeichen des Anspruches 1 angegebenen Merkmale gelöst.

Wesentlicher Gedanke hierbei ist, zwei zu einer Relativbewegung zueinander befähigte Momentenüberträger mit einer Verzahnung radial zwischen den beiden Momentenüberträgern auszubilden. Diese Verzahnung verfügt erfindungsgemäß über ein Radialspiel Z zwischen der jeweiligen Zahnaußenseite eines Zahnes des einen Momentenüberträgers und einem diesem Zahn zugeordneten Umfangsaussparungsboden in einer Umfangsaussparung des jeweiligen anderen Momentenüberträgers. Dieses Radialspiel Z soll betragsmäßig zumindest dem Radialversatz X zwischen einem Antrieb, wie beispielsweise einer Kurbelwelle einer Brennkraftmaschine, und einem Abtrieb, wie einer Getriebeeingangswelle, entsprechen. Auf diese Weise kann das Radialspiel Z im Bereich der Verzahnung problemlos den Radialversatz X der Mittenachsen kompensieren, ohne dass hierfür Energiespeicher der Dämpfungseinrichtung des Torsionsschwingungsdämpfers funktionell missbraucht und dadurch ggf. beschädigt würden.

Der Verzahnung zwischen den beiden Momentenüberträgern ist ein in Umfangsrichtung wirksames Vorspannelement zugeordnet, durch welches in definierter Wirkrichtung eine Relativdrehstellung der beiden Momentenüberträger zueinander eingestellt ist. Ein derartiges Vorspannelement kann durch elastische Elemente, beispielsweise in Form von zweiten Energiespeichern gebildet sein, ist aber ebenso auch durch elastomere Elemente ausbildbar, sofern diese zur Aufbringung einer Vorspannung geeignet sind. Der wesentliche Vorteil dieser Vorspannelemente findet sich bei Leerlaufbetrieb des Antriebs, da bei diesem Betriebszustand bedingt durch Torsionsschwingungen ein wechselweises Anschlagen von umfangsseitigen Zahnflanken der Verzahnung nicht ausgeschlossen werden kann, was geräuschmäßig verständlicherweise nicht tolerierbar ist. Diesem Verzahnungsgeräusch kann durch das Vorspannelement entgegengewirkt werden, indem bis zur Erreichen von die Vorspannung am Vorspannelement übersteigenden Momenten zwischen den beiden Momentenüberträgern vorbestimmte Zahnflanken der Verzahnung unterbrechungsfrei in Anlage aneinander gehalten werden.

Diesem Vorspannelement kann bei entsprechender Ausbildung eine weitere Funktion zugeordnet werden. Ein Vorspannelement in Form eines zweiten, mit vergleichsweise hoher Steifigkeit ausgebildeten Energiespeichers in Reihenschaltung mit dem ersten Energiespeicher der Dämpfungseinrichtung vermag beispielsweise eine effiziente Unterdrückung abtriebseitiger Torsionsschwingungen zu leisten, wobei sich derartige Torsionsschwingungen bei Kraftfahrzeugen, bei welchen die Hinterräder mittels einer Kardanwelle angetrieben werden, insbesondere bei mittleren Drehzahlbereichen einstellen können. Ebenso wäre bei Ausbildung der Vorspannelemente mit vergleichsweise geringer Steifigkeit die Funktion eines Leerlaufdämpfers realisierbar.

Durch eine in Achsrichtung flexible Ausbildung einer der beiden Momentenüberträger, vorzugsweise des radial äußeren, können Taumelbewegungen des Antriebs, welche auf das antriebsseitige Übertragungselement geleitet worden sind, bei Weiterleitung zumindest reduziert werden. Besonders effizient gestaltet sich diese Funktion, wenn dem axial elastischen Momentenüberträger eine Zusatzmasse zugeordnet ist, die aufgrund der Wirksamkeit als Tilger einer axialen Bewegungskomponente entgegenwirkt. Selbstverständlich wirkt die Zusatzmasse auch Torsionsschwingungen wegen der Erhöhung des Massenträgheitsmomentes vorteilhaft entgegen.

Mit besonderem Vorzug ist zumindest einer der beiden Momentenüberträger, insbesondere der radial äußere, zweiteilig ausgebildet, wobei die beiden Momentenübertragungsteile mittels einer beliebigen Verbindung aneinander befestigt werden können, wie beispielsweise Verschweißung, Verklebung, Vernietung oder Verschraubung. Mit Vorzug ist diese Verbindung so ausgebildet, dass mit Herstellung derselben gleichzeitig die dem Momentenüberträger zuordenbare Zusatzmasse am Momentenüberträger befestigt werden kann. Ziel der Zweiteiligkeit des Momentenüberträgers ist die Möglichkeit einer Verbindung erst während des Montagevorganges des Torsionsschwingungsdämpfers im Antriebsstrang eines Kraftfahrzeuges, wobei von der Getriebeseite aus zumeist hinreichend Bauraum zur Herstellung dieser Verbindung zur Verfügung steht.

Die beiden Momentenüberträgerteile können jeweils mit zumindest je einem axial elastischen Radialabschnitt gestaltet sein, jedoch ist ebenso auch nur eines dieser beiden Bauteile mit axial elastischer Gestaltung denkbar, während das andere axial steif ist. Auch eine Ausführung mit zwei axial steifen Bauteilen ist denkbar. Die jeweilige Gestaltung wird von den Schwingungsproblemen im Antriebsstrang abhängig sein, wobei eine axiale Elastizität bei starken Taumelbewegungen und damit starken axialen Bewegungskomponenten von Vorzug sein kann, insbesondere bei Ergänzung einer die Axialbewegungen zumindest teilweise kompensierenden, als Tilger wirksamen Zusatzmasse an der jeweiligen Nabenscheibe, jedoch muss, sofern zumindest ein axial elastischer Momentenübertragungsteil vorhanden ist, genügend axialer Bauraum bereitgestellt werden, um die gewünschte Bewegung dieses Momentenüberträgerteils nicht zu behindern. Sofern dieser Bauraum nicht vorhanden ist, wird daher mit Vorzug ein axial steiferer Momentenüberträger Verwendung finden.

Im folgenden wird ein Ausführungsbeispiel der Erfindung anhand einer Zeichnung näher erläutert. Es zeigt:
- Figur 1: die obere Hälfte eines Längsschnittes durch einen Torsionsschwingungsdämpfer mit einem einen ersten Momentenüberträger aufweisenden antriebsseitigen Übertragungselement, verbunden mit einer Kurbelwelle, und einem zweiten Momentenüberträger, drehfest mit einer Kupplungsvorrichtung;
- Figur 2: eine Draufsicht auf die beiden Momentenüberträger mit Blickrichtung A auf den in Fig. 1 eingekreisten radialen Abschnitt Y;
- Figur 3: wie Fig. 1, aber mit konstruktiv anderer Ausbildung des ersten Momentenüberträgers.

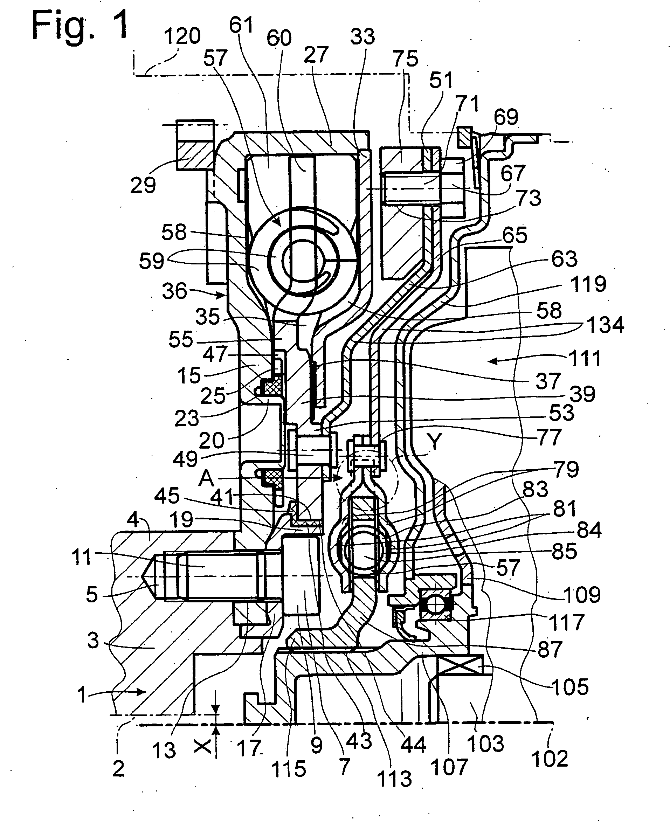

In Fig. 1 ist ein Torsionsschwingungsdämpfer dargestellt, bei dem ein sich im wesentlichen nach radial außen erstreckender Primärflansch 15 an einem Antrieb 1, wie beispielsweise einer um eine Mittenachse 2 drehbaren Kurbelwelle 3 einer Brennkraftmaschine aufgenommen ist. Hierzu weist die Kurbelwelle 3 an ihrem freien Ende einen Flansch 4 auf, der mit Gewindebohrungen 5 ausgebildet ist, die zur Aufnahme von Befestigungsmitteln 7 in Form von Schrauben 9 vorgesehen sind, deren Schaft 11 jeweils in eine der Gewindebohrungen einführbar ist. Der Schaft 11 jeder Schraube 9 durchgreift Durchgänge 13 des Primärflansches 15, der Teil eines antriebsseitigen Übertragungselementes 36 ist, sowie eine Anlagescheibe 17, die axial zwischen dem Kopf der Schraube 9 und dem Primärflansch 15 eingespannt ist. Die Anlagescheibe 17 weist radial außen eine Primärnabe 19 auf, die sich in einer von der Kurbelwelle 3 abgewandten Richtung erstreckt.

Zurückkommend auf den Primärflansch 15, ist dieser im radial mittleren Bereich mit einer Lagerausdrückung 20 versehen, die ein Planetenrad 23 eines Planetengetriebes 25 drehbar aufnimmt. Das Planetenrad 23 steht in Verzahnungseingriff mit einer Innenverzahnung 47, die an einer Nabenscheibe 39 vorgesehen ist, die somit als Hohlrad 55 des Planetengetriebes 25 dient.

Im radial äußeren Bereich geht der Primärflansch 15 in eine sich im wesentlichen axial erstreckende Ringwand 27 über und trägt einen Zahnkranz 29, der mit einem nicht gezeigten Anlasserritzel in Drehverbindung bringbar ist. Die Ringwand 27 dient zur Aufnahme einer im wesentlichen nach radial innen laufenden Dichtungswand 33, die zusammen mit der Ringwand 27 und dem Primärflansch 15 eine Fettkammer 35 umschließt, die zumindest teilweise mit viskosem Medium befüllt und Teil des antriebsseitigen Übertragungselementes 36 ist. Sowohl am Primärflansch 15 als auch an der Dichtungswand 33 sind jeweils antriebsseitige Ansteuerelemente 58 vorgesehen, die zur Beaufschlagung von sich im wesentlichen in Umfangsrichtung erstreckenden Energiespeichern 59 einer Dämpfungseinrichtung 57 dienen, wobei die Energiespeicher sich mit ihren von den antriebsseitigen Ansteuerelementen 58 abgewandten Enden an jeweils einem abtriebsseitigen Ansteuerelement 60 der Nabenscheibe 39 abstützen. Nach radial außen hin sind die Energiespeicher 59 an Schiebeelementen 61 aufgenommen, die sich ihrerseits gegenüber der Ringwand 27 radial abstützen.

Zur Abdichtung der bereits erwähnten Fettkammer 35 ist an der Dichtungswand 33 eine Axialeindrückung 37 vorgesehen, die bis auf Spaltbreite an den zugeordneten Bereich der Nabenscheibe 39 herangeführt ist, der im radial inneren Bereich eine Sekundärnabe 41 aufweist. Radial zwischen der bereits erwähnten Primärnabe 19 der Anlagescheibe 17 und der Sekundärnabe 41 der Nabenscheibe 39 ist eine Lagerung 43 vorgesehen, die im vorliegenden Fall als Gleitlagerung ausgebildet ist und sowohl über einen radialen Lagerteil 44 als auch über einen axialen Lagerteil 45 verfügt.

Die Nabenscheibe 39 ist radial außerhalb ihrer Sekundärnabe 41 mittels einer Verbindung 49 in Form einer Vernietung mit einem ersten Momentenüberträgerteil 63 verbunden, der sich im wesentlichen nach radial außen erstreckt und dort mit einem zweiten Momentenüberträgerteil über ein Verbindungsmittel 67 zur Bildung eines ersten Momentenüberträgers 51 verbunden ist. Dieses Verbindungsmittel 67 ist im vorliegenden Fall durch Schrauben 69 gebildet, die mit ihrem jeweiligen Schaft 71 nicht nur Durchgänge der beiden Momentenüberträgerteile 63, 65 durchdringen, sondern darüber hinaus auch in eine Gewindebohrung 73 einer Zusatzmasse 75 eingreifen, wobei die letztgenannte an der der Dichtungswand 33 zugewandten Seite des ersten Momentenüberträgerteils 63 befestigt ist.

Der zweite Momentenüberträgerteil 65 nimmt über eine Verbindung 77 Vorspannelementen-Aufnehmer 79 in Form von Deckblechen auf, die über Ansteuerelemente 81 ein Vorspannelement 83 beaufschlagen, welches sich anderenends an abtriebsseitigen Ansteuerelementen 85 eines zweiten Momentenüberträgers 87 abstützen, wobei der letztgenannte radial innerhalb des ersten Momentenüberträgers 51 angeordnet ist.

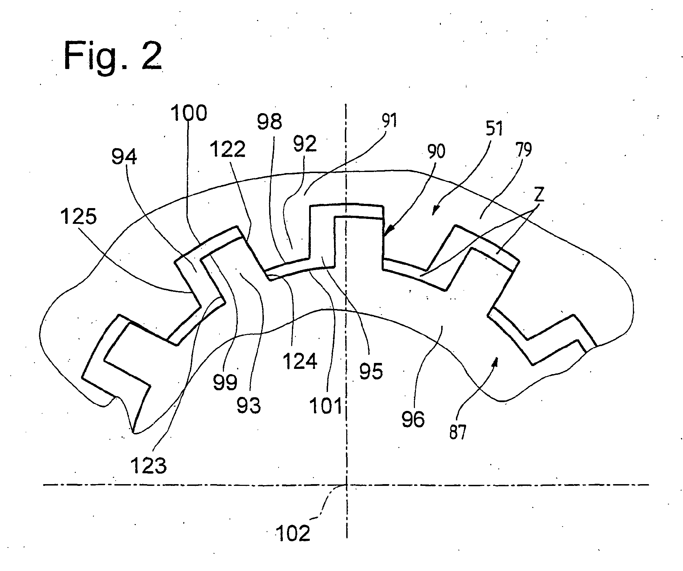

Fig. 1 zeigt in stichpunktierter Darstellung einen ausgewählten Bereich Y mit Blickrichtung A, wobei die zeichnerische Darstellung dieses Bereiches Y in Fig. 2 vorliegt. Wie diese Fig. 2 zeigt, sind die Vorspannelementen-Aufnehmer 79 des ersten Momentenüberträgers 51 über einen ersten Verzahnungsteil 91 einer Verzahnung 90 mit im wesentlichen nach radial innen greifenden Zähnen 92 versehen, die jeweils in eine Umfangsaussparung 94 eines zweiten Verzahnungsteils 96 eingreift, die radial außen am zweiten abtriebsseitigen Momentenüberträger 87 vorgesehen ist. Die Zähne 92 des ersten Verzahnungsteils 91 greifen hierbei derart in die jeweilige Umfangsaussparung 94 des zweiten Verzahnungsteils 96 ein, dass zwischen der jeweiligen Zahnaußenseite 98 und dem zugeordneten Umfangsaussparungsboden 100 ein Radialspiel Z verbleibt, das betragsmäßig mindestens einem Radialversatz X der Mittenachse 2 der Kurbelwelle 3 gegenüber einer Mittenachse 102 eines Abtriebs 103, wie einer Getriebeeingangswelle, eingezeichnet in Fig. 1, entspricht. Die gleiche Situation hinsichtlich des Radialspieles Z besteht selbstverständlich auch dann, wenn Zähne 93 des zweiten Verzahnungsteils 96 der Verzahnung 90 am zweiten Momentenüberträger 87 im wesentlichen nach radial außen greifen und jeweils in eine Umfangsaussparung 95 des ersten Verzahnungsteils 91 eingreifen, der radial innen am ersten Momentenüberträger 51 vorgesehen ist. Die Zähne 93 des zweiten Verzahnungsteils 96 greifen hierbei derart in die jeweilige Umfangsaussparung 95 des ersten Verzahnungsteils 91 ein, dass zwischen der jeweiligen Zahnaußenseite 99 und dem zugeordneten Umfangsaussparungsboden 101 das Radialspiel Z verbleibt.

Der Abtrieb 103, nachfolgend in seiner konkreten Form als Getriebeeingangswelle 103 bezeichnet, ist über eine nur schematisch dargestellte erste Radiallagerung 105 gegenüber einem Lagerzapfen 107 einer Kupplungsvorrichtung 111 zentriert, der drehfest mit einem Gehäuse 109 dieser Kupplungsvorrichtung 111 verbunden ist. Der Lagerzapfen 107 ist über eine Verzahnung 113 drehfest mit einer Nabe 115 des zweiten Momentenüberträgers 87 verbunden. Über diese Verbindung wird eine Rotationsbewegung des Torsionsschwingungsdämpfers, die diesem über die Kurbelwelle 3 des Antriebs 1 zugeleitet wurde, über den Lagerzapfen 107 auf das Gehäuse 109 der Kupplungsvorrichtung 111 übertragen, das somit ebenfalls rotiert und zwar um die Mittenachse 102. Eine zweite Radiallagerung 117, angeordnet zwischen dem Lagerzapfen 107 bzw. dem Gehäuse 109 und einem getriebefesten Gehäusedeckel 119 gleicht die Drehzahldifferenz zwischen den besagten Bauteilen aus. Der Gehäusedeckel 119 ist im Getriebegehäuse 120 positioniert, wobei das letztgenannte bezüglich seiner Kontur durch strichlinierte Darstellung abgebildet ist.

Der bereits erwähnte Radialversatz X zwischen den Mittenachsen 2 und 102 von Kurbelwelle 3 und der Getriebeeingangswelle 103 kann sowohl fertigungsbedingt als auch taumelschwingungsbedingt auftreten, wobei dieser Radialversatz X überbrückt werden muss. Insbesondere aufgrund von Taumelbewegungen der Kurbelwelle 3 sind nicht nur Schwingungen mit einer Bewegungskomponente in Radialrichtung vorhanden, sondern darüber hinaus auch solche mit einer Bewegungskomponente in Axialrichtung, wobei beiden vorgenannten Bewegungsrichtungen zudem Torsionsschwingungen, in Umfangsrichtung orientiert, überlagert sein können. Zum Abbau von Schwingungen mit im wesentlichen axialer Bewegungskomponente sind die beiden Momentenüberträgerteile 63,65 zumindest in einem axial elastisch verformbaren Radialabschnitt 134, der bevorzugt im radial mittleren Bereich der Momentenüberträgerteile 63,65 und damit im wesentlichen radial innerhalb der Zusatzmasse 75 vorgesehen ist, jeweils axial elastisch ausgebildet, so dass durch die Momentenüberträgerteile 63,65 axiale Relativbewegungen ausgeglichen werden können. Auch die Zusatzmasse 75 vermag in Axialrichtung wirksam sein, indem sie in der Weise eines Tilgers trägheitsbedingt verzögert einer schwingungsbedingten Axialauslenkung nachfolgt. Im wesentlichen wird durch die Zusatzmasse 75 allerdings die Massenträgheit beträchtlich erhöht, zumal die Zusatzmasse 75 im radial äußeren Bereich der Momentenüberträgerteile 63,65 und damit des ersten Momentenüberträgers 51 angeordnet ist. Dies ist insbesondere dann von Nöten, wenn die Kupplungsvorrichtung 111 zwar bezüglich ihrer Masse hinreichend hoch liegt, allerdings auf vergleichsweise kleinem Durchmesser gegenüber der Mittenachse 102 verbleibt. Durch die Zusatzmasse 75 werden dann die Möglichkeiten des Torsionsschwingungsdämpfers bei der Dämpfung von Torsionsschwingungen erheblich verbessert.

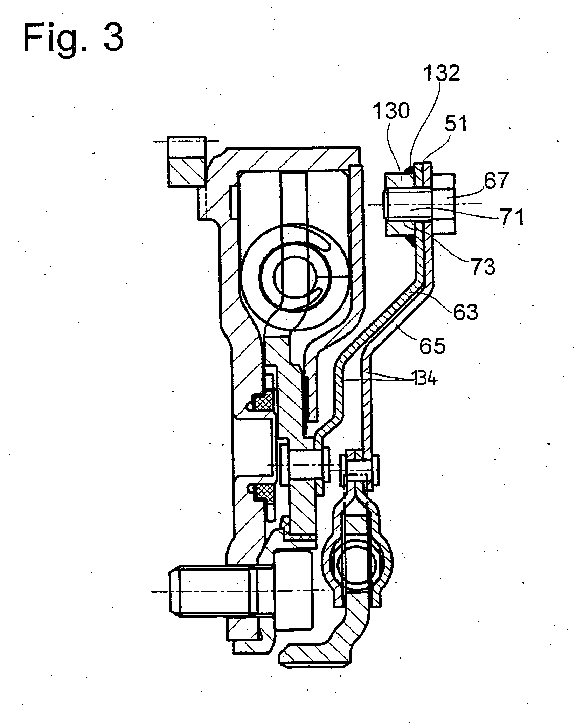

Wenn gemäß Fig. 3 auf die Zusatzmasse 75 verzichtet werden soll, greifen die Verbindungsmittel 67 in Form der Schrauben 69 mit dem jeweiligen Gewindeschaft 71 in eine Gewindebohrung 73 ein, die in einer Gewindehülse 130 vorgesehen ist. Diese ist mittels einer Schweißnaht 132 an der der Dichtungswand 33 und damit an der dem antriebsseitigen Übertragungselement 36 zugewandten Seite des ersten Momentenüberträgerteils 63 befestigt.

Wie bereits behandelt, sind die Verzahnungsteile 91 und 96 zwischen dem ersten Momentenüberträger 51 und dem zweiten Momentenüberträger 87 zum Ausgleich eines Radialversatzes X zwischen den Mittenachsen 2 und 102 von Kurbelwelle 3 und der Getriebeeingangswelle. 103 vorgesehen, weshalb das Radialspiel Z zwischen der jeweiligen Zahnaußenseite 98, 99 eines Zahnes 92, 93 und dem Umfangsaussparungsboden 100, 101 der zugeordneten Umfangsaussparung 94, 95 vorhanden ist. Gleichzeitig ist jede Umfangsaussparung 94, 95 in Umfangsrichtung durch Vorgabe eines umfangsseitigen Raumüberschusses derart gegenüber dem zugeordneten Zahn 92, 93 bemessen, dass der Zahn 92, 93 trotz zunehmender Breite in zunehmendem Abstand von seiner Zahnaußenseite 98 behinderungsfrei radial in die entsprechende Umfangsaussparung 94 eintauchen kann. Um trotz dieses umfangsseitigen Raumüberschusses auch bei Leerlaufbetrieb der Brennkraftmaschine Anschlaggeräusche vermeiden zu können, werden die beiden Verzahnungsteile 91 und 96 derart durch das Vorspannelement 83 beaufschlagt, dass die Zähne 92, 93 jeweils mit einer vorbestimmten Zahnflanke 122 123 an einer jeweils benachbarten Umfangsaussparungsbegrenzung 124, 125 der Umfangsaussparung 94, 95 in Anlage gehalten sind, und nur bei Überschreitung der dem Vorspannelement 83 zugrundeliegenden Vorspannung ein Lösen der Zahnflanke 122, 123 von der Umfangsaussparungsbegrenzung 124, 125 möglich ist. Das Vorspannelement 83 kann durch zumindest ein elastisches Element 84 in Form eines zweiten Energiespeichers gebildet sein, der in Reihenschaltung zu den ersten Energiespeichern 59 steht, wobei eine besonders vorteilhafte Ausbildung in der Ausführung des zweiten Energiespeicher mit einer Federsteifigkeit liegt, bei welcher vorbestimmte abtriebsseitige Schwingungen, die sich in Form von Dröhnfrequenzen äußern, wirksam ausgefiltert werden können. Im wesentlichen sind dies Schwingungen, die von einer Kardanwelle eines Fahrzeuges mit Hinterradantrieb zumindest begünstigt werden.

### Bezugszeichenliste

- 1: Antrieb
- 2: Mittenachse
- 3: Kurbelwelle
- 4: Flansch
- 5: Gewindebohrungen
- 7: Befestigungsmittel
- 9: Schrauben
- 11: Schaft
- 13: Durchgänge
- 15: Primärflansch
- 17: Anlagescheibe
- 19: Primärnabe
- 20: Lagerausdrückung
- 23: Planetenrad
- 25: Planetengetriebe
- 27: Ringwand
- 29: Zahnkranz
- 33: Dichtungswand
- 25: Fettkammer
- 36: antriebsseitiges Übertragungselement
- 37: Axialeindrückung
- 39: Nabenscheibe
- 41: Sekundärnabe
- 43: Lagerung
- 45: axialer Lagerteil
- 47: Innenverzahnung
- 49: Vernietung
- 51: erster Momentenüberträger
- 55: Hohlrad
- 57: Dämpfungseinrichtung
- 58: antriebsseitige Ansteuerelemente
- 59: erste Energiespeicher
- 60: abtriebsseitiges Ansteuerelement
- 61: Schiebeelemente
- 63: erster Nabenscheibenteil
- 65: zweiter Nabenscheibenteil
- 67: Verbindungsmittel
- 69: Schrauben
- 71: Gewindeschaft
- 73: Gewindebohrung
- 75: Zusatzmasse
- 77: Verbindung
- 79: Vorspannelementen-Aufnehmer
- 81: antriebsseitige Ansteuerelemente
- 83: Vorspannelement
- 84: elastisches Element
- 85: abtriebsseitiges Ansteuerelement
- 87: zweiter Momentenüberträger
- 90: Verzahnung
- 91: erster Verzahnungsteil
- 92,93: Zähne
- 94,95: Umfangsaussparung
- 96: zweiter Verzahnungsteil
- 98,99: Zahnaußenseite
- 100,101: Umfangsaussparungsboden
- 102: Mittenachse
- 103: Abtrieb
- 105: erste Radiallagerung
- 107: Lagerzapfen
- 109: Gehäuse
- 111: Kupplungsvorrichtung
- 113: Verzahnung
- 115: Nabe
- 117: zweite Radiallagerung
- 119: getriebefester Gehäusedeckel
- 120: Getriebegehäuse
- 122,123: Zahnflanke
- 124,125: Umfangsaussparungsbegrenzung
- 130: Gewindehülse
- 132: Schweißnaht
- 134: axial elastisch verformbarer Radialabschnitt

## Patentansprüche

1. Torsionsschwingungsdämpfer mit einem antriebsseitigen Übertragungselement (36), das gegenüber einer Mittenachse (2) eines Antriebes (1) zentrierbar ist, mit einer Dämpfungseinrichtung (57) und mit einer abtriebsseitig mit derselben in Wirkverbindung bringbaren Nabenscheibe (39), die gegenüber dem antriebsseitigen Übertragungselement (36) drehauslenkbar und mit einem ersten Momentenüberträger (51) drehfest ist, der relativ drehbar zu einem zweiten Momentenüberträger (87) angeordnet ist, der über eine Nabe (115) zum drehfesten Angriff an einem Abtrieb (103) vorgesehen und gegenüber einer Mittenachse (102) dieses Abtriebes (103) zentrierbar ist, wobei zwischen den beiden Momentenüberträgern (51, 87) eine einen vorbestimmten Relativdrehauslenkwinkel zulassende, mit zwei Verzahnungsteilen (91, 96) ausgebildete Verzahnung (90) vorgesehen ist, bei welcher an zumindest einem der beiden Verzahnungsteile (91, 96) wenigstens ein Zahn (92, 93) ausgebildet ist, der mit seiner Zahnaußenseite (98, 99) an einen zugeordneten Umfangsaussparungsboden (100, 101) einer den Zahn (92, 93) aufnehmenden Umfangsaussparung (94, 95) des jeweils anderen Verzahnungsteiles (91, 96) unter Verbleib eines Radialspiels (Z) zwischen der Zahnaußenseite (98, 99) und dem Umfangsaussparungsboden (100, 101) angenähert ist, und die Umfangsaussparung (94, 95) in Umfangsrichtung zumindest gemäß der Umfangserstreckung des Zahnes (92, 93) an der Stelle seiner größten Umfangserstreckung bemessen ist, wobei der Verzahnung (90) ein in Umfangsrichtung zwischen den beiden Verzahnungsteilen (91, 96) wirksames, als Vorspannelement (83) ausgebildetes und eine Vorspannkraft umfangsmäßig zwischen den beiden Momentenüberträgern (51, 87) ausübendes elastisches Element (84) zugeordnet ist,
**dadurch gekennzeichnet,**
**dass** das Radialspiel (Z) im Bereich der Verzahnung (90) und damit zwischen den beiden Momentenüberträgern (51, 87) zur Kompensation eines radialen Achsversatzes (X) zwischen den beiden Mittenachsen (2, 102) von Antrieb (1) und Abtrieb (103) vorgesehen ist, und durch die vom Vorspannelement (83) ausgeübte Vorspannkraft bis zum Erreichen eines in der Verzahnung (90) wirksamen vorbestimmten Momentes eine Inanlagehaltung einer vorbestimmten umfangsseitigen Zahnflanke (122, 123) des jeweiligen Zahns (92, 93) an einer dieser Zahnflanke (122, 123) benachbarten Umfangsaussparungsbegrenzung (124, 125) gesichert ist.

2. Torsionsschwingungsdämpfer nach Anspruch 1,
**dadurch gekennzeichnet,**
**dass** der erste Momentenüberträger (51), ausgehend von der Nabenscheibe (39), sich trägheitserhöhend im Wesentlichen nach radial außen erstreckt.

3. Torsionsschwingungsdämpfer nach Anspruch 1 oder 2 mit einem ersten Momentenüberträger (51), der aus zumindest zwei Momentenüberträgerteilen (63, 65) zusammengesetzt ist, die durch Verbindungsmittel (67) miteinander in Festverbindung verbringbar sind,
**dadurch gekennzeichnet,**
**dass** durch die Verbindungsmittel (67) spätestens beim montagebedingten Einbau des Torsionsschwingungsdämpfers in einem Kraftfahrzeug die Verbindung zwischen den beiden Momentenüberträgerteilen (63, 65) des Momentenüberträgers (51) einbringbar ist.

4. Torsionsschwingungsdämpfer nach einem der Ansprüche 1 bis 3,
**dadurch gekennzeichnet,**
**dass** dem ersten Momentenüberträger (51) mindestens eine Zusatzmasse (75) zugeordnet ist.

5. Torsionsschwingungsdämpfer nach Anspruch 4,
**dadurch gekennzeichnet,**
**dass** die Zusatzmasse (75) durch das Verbindungsmittel (67) an dem ersten Momentenüberträger (51) befestigt ist.

6. Torsionsschwingungsdämpfer nach einem der Ansprüche 3 bis 5,
**dadurch gekennzeichnet,**
**dass** das Verbindungsmittel (67) durch wenigstens eine Schraube (69) gebildet ist, die mit einem Gewindeschaft (71) in eine zugeordnete Gewindebohrung (73) eines Bauteiles (75, 130) eingreift, das einem der beiden Momentenüberträgerteile (63, 65) befestigungsmäßig zumindest zugeordnet ist.

7. Torsionsschwingungsdämpfer nach Anspruch 6,
**dadurch gekennzeichnet,**
**dass** die Gewindebohrung (73) für den Gewindeschaft (71) der Schraube (69) in der Zusatzmasse (75) oder, bei Ausbildung ohne eine solche, in einer an einem der beiden Momentenüberträgerteile (63, 65) befestigten Gewindehülse (130) ausgebildet ist.

8. Torsionsschwingungsdämpfer nach Anspruch 7,
**dadurch gekennzeichnet,**
**dass** die Gewindehülse (130) mittels einer Schweißnaht (132) an einem der beiden Momentenüberträgerteile (63) befestigt ist.

9. Torsionsschwingungsdämpfer nach Anspruch 6 oder 7,
**dadurch gekennzeichnet,**
**dass** das die Gewindebohrung (73) für den den Gewindeschaft (71) der Schraube (69) aufnehmende Bauteil (75, 130) jeweils dem fest mit der Nabenscheibe (39) verbundenen Momentenüberträgerteil (63) zugeordnet ist.

10. Torsionsschwingungsdämpfer nach einem der Ansprüche 3 bis 9,
**dadurch gekennzeichnet,**
**dass** zumindest einer der beiden Momentenüberträgerteile (63, 65) des ersten Momentenüberträgers (51) in Achsrichtung elastisch ausgebildet ist.

11. Torsionsschwingungsdämpfer nach einem der Ansprüche 3 bis 10,
**dadurch gekennzeichnet,**
**dass** der erste Momentenüberträgerteil (63) des ersten Momentenüberträgers (51) an der Nabenscheibe (39) befestigt ist, während der zweite Momentenüberträgerteil (65) über eine feste Verbindung (77) an Vorspannelementen-Aufnehmern (79) angreift.

12. Torsionsschwingungsdämpfer nach Anspruch 1,
**dadurch gekennzeichnet,**
**dass** das Vorspannelement (83) mit einem ersten Energiespeicher (59) in Reihenschaltung angeordnet und somit als Teil der Dämpfungseinrichtung (57) wirksam ist.

13. Torsionsschwingungsdämpfer nach Anspruch 1 oder 12,
**dadurch gekennzeichnet,**
**dass** das Vorspannelement (83) eine Dämpfung von Schwingungen des Abtriebs (103) begünstigt.

## Claims

1. Torsional vibration damper having a drive-side transmission element (36), which can be centred in relation to a centre axis (2) of a drive (1), a damping device (57) and a hub disk (39), which can be brought into operative connection therewith on the output side and which is both rotationally displaceable in relation to the drive-side transmission element (36) and rotationally fixed to a first torque transmitter (51), which is rotatably arranged relative to a second torque transmitter (87), which is intended for rotationally fixed action on a driven output (103) via a hub (115) and can be centred in relation to a centre axis (102) of this driven output (103), a toothing arrangement (90) formed with two toothing sections (91, 96) and permitting a predefined angle of relative rotational displacement, being provided between the two torque transmitters (51, 87), on at least one of the two toothing sections (91, 96) of which toothing arrangement at least one tooth (92, 93) is formed, which with its tooth outer side (98, 99) in each case comes close to an associated circumferential recess base (100, 101) of a circumferential recess (94, 95) of the other toothing section (91, 96) receiving the tooth (92, 93) whilst leaving a radial play (Z) between the tooth outer side (98, 99) and the circumferential recess base (100, 101), and the circumferential recess (94, 95) in a circumferential direction is dimensioned at least according to the circumferential extent of the tooth (92, 93) at the point of its greatest circumferential extent, an elastic element (84), embodied as a tensioning element (83) acting in a circumferential direction between the two toothing sections (91, 96) and circumferentially exerting a tensioning force between the two torque transmitters (51, 87), being assigned to the toothing arrangement (90), **characterized in that** the radial play (Z) in the area of the toothing arrangement (90) and thereby between the two torque transmitters (51, 87) is intended to compensate for a radial axis offset (X) between the two centre axes (2, 102) of the drive (1) and the driven output (103), and a bearing contact of a predefined circumferential tooth flank (122, 123) of the respective tooth (92, 93) against a circumferential recess boundary (124, 125) adjacent to this tooth flank (122, 123) is maintained by the tensioning force exerted by the tensioning element (83) until a predefined torque acting in the toothing arrangement (90) is attained.

2. Torsional vibration damper according to Claim 1, **characterized in that** the first torque transmitter (51) substantially extends radially outward from the hub disk (39), increasing the inertia.

3. Torsional vibration damper according to Claim 1 or 2 having a first torque transmitter (51), which comprises at least two torque transmitting sections (63, 65), which by means of a fastener (67) can be brought into fixed connection with one another, **characterized in that** the fastener (67) establishes the connection between the two torque transmitting sections (63, 65) of the torque transmitter (51) before or when the torsional vibration damper is fitted in a motor vehicle during the assembly process.

4. Torsional vibration damper according to one of Claims 1 to 3, **characterized in that** at least one auxiliary mass (75) is assigned to the first torque transmitter (51).

5. Torsional vibration damper according to Claim 4, **characterized in that** the auxiliary mass (75) is fixed to the first torque transmitter (51) by the fastener (67).

6. Torsional vibration damper according to one of Claims 3 to 5, **characterized in that** the fastener (67) is formed by at least one bolt (69), which with a threaded shank (71) engages in an associated threaded hole (73) of a component (75, 130), which in its fastening is at least associated with one of the two torque transmitting sections (63, 65).

7. Torsional vibration damper according to Claim 6, **characterized in that** the threaded hole (73) for the threaded shank (71) of the bolt (69) is formed in the auxiliary mass (75) or, in the absence thereof, in a threaded sleeve (130) fixed to one of the two torque transmitting sections (63, 65).

8. Torsional vibration damper according to Claim 7, **characterized in that** the threaded sleeve (130) is fixed to one of the two torque transmitting sections (63) by means of a weld seam (132).

9. Torsional vibration damper according to Claim 6 or 7, **characterized in that** the component (75, 130) accommodating the threaded hole (73) for the threaded shank (71) of the bolt (69) is in each case assigned to the torque transmitting section (63) firmly connected to the hub disk (39).

10. Torsional vibration damper according to one of Claims 3 to 9, **characterized in that** at least one of the two torque-transmitting sections (63, 65) of the first torque transmitter (51) is of elastic design in an axial direction.

11. Torsional vibration damper according to one of Claims 3 to 10, **characterized in that** the first torque-transmitting section (63) of the firs torque transmitter (51) is fixed to the hub disk (39), whilst the second torque-transmitting section (65) acts by way of a fixed connection (77) on the tensioning element receivers (79).

12. Torsional vibration damper according to Claim 1, **characterized in that** the tensioning element (83) is arranged in series connection with a first energy storage device (59) and consequently acts as part of the damping device (57).

13. Torsional vibration damper according to Claim 1 or 12, **characterized in that** the tensioning element (83) promotes a damping of vibrations of the driven output (103).

## Revendications

1. Amortisseur de vibrations torsionnelles comprenant un élément de transfert (36) du côté de l'entraînement, qui peut être centré par rapport à un axe médian (2) d'un entraînement (1), avec un dispositif d'amortissement (57) et avec un disque de moyeu (39) pouvant être amené en liaison fonctionnelle avec celui-ci du côté de la sortie d'entraînement, qui peut être dévié par rotation par rapport à l'élément de transfert (36) du côté de l'entraînement et qui est solidaire en rotation avec un premier dispositif de transfert de couple (51), qui est disposé de manière relativement rotative par rapport à un deuxième dispositif de transfert de couple (87), qui est prévu pour s'engager de manière solidaire en rotation avec une sortie d'entraînement (103) par le biais d'un moyeu (115) et qui peut être centré par rapport à un axe médian (102) de cette sortie d'entraînement (103), une denture (90) réalisée avec deux parties de denture (91, 96), autorisant un angle de déviation de rotation relatif prédéterminé, étant prévue entre les deux dispositifs de transfert de couple (51, 87), dans laquelle au moins une dent (92, 93) est réalisée sur au moins l'une des deux parties de denture (91, 96), laquelle est rapprochée avec son côté de dent extérieur (98, 99) d'un fond d'évidement périphérique associé (100, 101) d'un évidement périphérique (94, 95), recevant la dent (92, 93), de l'autre partie de denture respective (91, 96) en laissant un jeu radial (Z) entre le côté extérieur de la dent (98, 99) et le fond d'évidement périphérique (100, 101), et l'évidement périphérique (94, 95) étant dimensionné, dans la direction périphérique au moins conformément à l'étendue périphérique de la dent (92, 93) à l'emplacement de sa plus grande étendue périphérique, la denture (90) étant associée à un élément élastique (84) agissant dans la direction périphérique entre les deux parties de denture (91, 96), réalisé en tant qu'élément de précontrainte (83) et exerçant une force de précontrainte sur la périphérie entre les deux dispositifs de transfert de couple (51, 87),
**caractérisé en ce que**
le jeu radial (Z) dans la région de la denture (90) et donc entre les deux dispositifs de transfert de couple (51, 87) est prévu pour la compensation d'un décalage d'axe radial (X) entre les deux axes médians (2, 102) de l'entraînement (1) et de la sortie d'entraînement (103), et du fait de la force de précontrainte exercée par l'élément de précontrainte (83) jusqu'à l'obtention d'un couple prédéterminé agissant dans la denture (90), un maintien en position d'un flanc de dent (122, 123) prédéterminé du côté périphérique de chaque dent (92, 93) est assuré au niveau d'une limitation d'évidement périphérique (124, 125) adjacente à ce flanc de dent (122, 123).

2. Amortisseur de vibrations torsionnelles selon la revendication 1,
**caractérisé en ce que**
le premier dispositif de transfert de couple (51) s'étend essentiellement radialement vers l'extérieur en augmentant l'inertie, à partir du disque de moyeu (39).

3. Amortisseur de vibrations torsionnelles selon la revendication 1 ou 2, comprenant un premier dispositif de transfert de couple (51), qui se compose d'au moins deux parties de dispositif de transfert de couple (63, 65), qui peuvent être amenées en liaison fixe l'une avec l'autre par des moyens de connexion (67),
**caractérisé en ce que**
du fait des moyens de connexion (67), la connexion entre les deux parties de dispositif de transfert de couple (63, 65) du dispositif de transfert de couple (51) peut être incorporée au plus tard lors de l'installation pendant le montage de l'amortisseur de vibrations torsionnelles dans un véhicule automobile.

4. Amortisseur de vibrations torsionnelles selon l'une quelconque des revendications 1 à 3,
**caractérisé en ce que**
l'on associe au premier dispositif de transfert de couple (51) au moins une masse supplémentaire (75).

5. Amortisseur de vibrations torsionnelles selon la revendication 4,
**caractérisé en ce que**
la masse supplémentaire (75) est fixée par le moyen de connexion (67) au premier dispositif de transfert de couple (51).

6. Amortisseur de vibrations torsionnelles selon l'une quelconque des revendications 3 à 5,
**caractérisé en ce que**
le moyen de connexion (67) est formé par au moins une vis (69) qui vient en prise avec une tige filetée (71) dans un alésage fileté associé (73) d'un composant (75, 130), qui est au moins associé par fixation à l'une des deux parties de dispositif de transfert de couple (63, 65).

7. Amortisseur de vibrations torsionnelles selon la revendication 6,
**caractérisé en ce que**
l'alésage fileté (73) pour la tige filetée (71) de la vis (69) est réalisé dans la masse supplémentaire (75), ou, dans le cas d'une réalisation sans cette dernière, est réalisé dans une douille filetée (130) fixée sur l'une des deux parties de dispositif de transfert de couple (63, 65) .

8. Amortisseur de vibrations torsionnelles selon la revendication 7,
**caractérisé en ce que**
la douille filetée (130) est fixée au moyen d'un cordon de soudure (132) à l'une des deux parties de dispositif de transfert de couple (63).

9. Amortisseur de vibrations torsionnelles selon la revendication 6 ou 7,
**caractérisé en ce que**
l'alésage fileté (73) pour le composant (75, 130) recevant la tige filetée (71) de la vis (69) est associé à chaque fois à la partie de dispositif de transfert de couple (63) connectée fixement au disque de moyeu (39).

10. Amortisseur de vibrations torsionnelles selon l'une quelconque des revendications 3 à 9,
**caractérisé en ce**
**qu'**au moins l'une des deux parties de dispositif de transfert de couple (63, 65) du premier dispositif de transfert de couple (51) est réalisée sous forme élastique dans la direction axiale.

11. Amortisseur de vibrations torsionnelles selon l'une quelconque des revendications 3 à 10,
**caractérisé en ce que**
la première partie de dispositif de transfert de couple (63) du premier dispositif de transfert de couple (51) est fixée sur le disque de moyeu (39) tandis que la deuxième partie de dispositif de transfert de couple (65) vient en prise par le biais d'une connexion fixe (77) avec des récepteurs d'éléments de précontrainte (79).

12. Amortisseur de vibrations torsionnelles selon la revendication 1,
**caractérisé en ce que**
l'élément de précontrainte (83) est disposé avec un premier accumulateur d'énergie (59) dans un montage en série et agit ainsi comme partie du dispositif d'amortissement (57).

13. Amortisseur de vibrations torsionnelles selon la revendication 1 ou 12,
**caractérisé en ce que**
l'élément de précontrainte (83) favorise un amortissement des vibrations de la sortie d'entraînement (103).
